# EUROPEAN PATENT SPECIFICATION

(11) **EP 4 288 632 B1**
(45) Date of publication and mention of the grant of the patent: **08.04.2026**
(21) Application number: 22704357.7
(22) Date of filing: 04.02.2022
(51) Int. Cl.: E05F 15/73, E05F 15/76, E05F 15/77

(54) **METHOD AND APPARATUS FOR CONTROLLING A BARRIER**
VERFAHREN UND VORRICHTUNG ZUR STEUERUNG EINER BARRIERE
PROCÉDÉ ET APPAREIL DE COMMANDE D'UNE BARRIÈRE

(30) Priority: 05.02.2021 GB 202101644
(43) Date of publication of application: 13.12.2023
(73) Proprietor: Jaguar Land Rover Limited, Coventry, Warwickshire CV3 4LF (GB)
(72) Inventor: SISWICK, Howard, Coventry, Warwickshire CV3 4LF (GB); KHAN, Mohammed, Coventry, Warwickshire CV3 4LF (GB); WADDELL, David, Coventry, Warwickshire CV3 4LF (GB)
(74) Representative: Jaguar Land Rover Patents Department
(86) International application number: PCT/EP2022/052680
(87) International publication number: WO 2022/167568

(56) References cited:
- WO-A1-2020/016121
- CA-A1- 3 011 587
- US-A1- 2015 266 356
- US-A1- 2019 048 644
- US-A1- 2020 240 198

## Description

### TECHNICAL FIELD

The present invention relates to a control system for a vehicle to enable communication with a moveable barrier and a method of controlling operation of the moveable barrier. The invention also relates to a vehicle comprising the control system.

### BACKGROUND

It is known to provide a garage for a vehicle with an electrically operated door which can be controlled remotely. A remote transmitter is typically provided to control the opening and closing of the door. The vehicle driver must locate and operate the remote transmitter to open the door as the vehicle approaches. The remote transmitter must be operated again as the vehicle departs to close the door. The driver may attempt to operate the remote transmitter while the vehicle is moving or may instead stop the vehicle while operating the remote transmitter.

US 2019/048644 A1 discloses an example of a control system for a vehicle to enable communication with a moveable barrier.

The present invention seeks at least partially to overcome or reduce problems or limitations associated with known systems.

### SUMMARY OF THE INVENTION

The scope of the invention is defined by the appended claims.

This disclosure relates to a control system for a vehicle to enable communication with a moveable barrier, the control system comprising a radio frequency transceiver and one or more controller configured to:
communicate with the moveable barrier to determine a geospatial location of the vehicle relative to the moveable barrier by: i) for each of a plurality of spaced apart antennas at the vehicle and/or at the moveable barrier, measuring a time of flight of a signal transmitted from the moveable barrier to the control system and/or from the control system to the moveable barrier, and ii) trilateration or true-range multilateration of the signals; and generate a control signal in dependence on the determined geospatial location, the control signal being configured to control movement of the moveable barrier; wherein the radio frequency transceiver is configured to: transmit a polling signal to the moveable barrier; receive an identification signal from the moveable barrier when the moveable barrier receives the polling signal. The control system comprises an ultrawideband transmitter configured to transmit the control signal over a bandwidth greater than or equal to 500 MHz.

The control system may be implemented in a vehicle. The moveable barrier may be disposed external to the vehicle. By way of example, the moveable barrier may comprise a garage door, a gate or a bollard. The moveable barrier may be operated by an actuator, such as an electric motor or other drive mechanism. The actuator may be controlled selectively to open and close the moveable barrier.

At least in certain embodiments, the one or more controller is configured automatically to control operation of the moveable barrier. The or each controller is configured to determine a current distance between the vehicle and the moveable barrier. The current distance may be referred to as a barrier-to-vehicle distance. The control signal is generated in dependence on the determined current distance. The current distance is used a condition for controlling generation of the control signal. The control signal may request that the moveable barrier is opened or closed. By way of example, the operation of the moveable barrier open function may be permitted with the vehicle is within a predetermined range of the moveable barrier (or an associated entrance). At least in certain embodiments, this may enable automatic operation of the moveable barrier. The requirement for input from the driver may be reduced or avoided. This may enable handsfree operation of the moveable barrier.

The current distance provides an indication of a distance between the barrier and the vehicle. The control system determines the current distance by communicating with a barrier control unit associated with the moveable barrier. The one or more controller determines the current distance by measuring a time-of-flight of a signal transmitted to the barrier control unit and/or received from the barrier control unit. The barrier control unit may be disposed in a base station. Alternatively, the barrier control unit may be incorporated into the moveable barrier. The control system may optionally apply a correction to the determined current distance, for example to account for an offset between barrier control unit and the moveable barrier.

The moveable barrier may be moveable between an open position and a closed position. The moveable barrier may pivot and/or translate between the open position and the closed position.

The one or more controller comprises at least one electronic processor having an electrical output for outputting a control signal to control the moveable barrier. At least one memory device may be electrically coupled to the at least one electronic processor and having instructions stored therein. The at least one electronic processor may be configured to access the at least one memory device and execute the instructions therein so as to control the moveable barrier.

The one or more controller may be configured to generate the control signal in dependence on a comparison of the determined current distance to a first set distance. The first set distance may be predefined. The first set distance may be calibratable, for example the first set distance may be user-calibratable to suit a particular use case.

The one or more controller may generate the control signal in dependence on a determination that the current distance is less than or equal to the first set distance. The control signal may comprise or consist of a first control signal. The first control signal may comprise a request to displace the moveable barrier to a first position. The first position may be an open position. The first control signal may comprise or consist of an open barrier request.

The one or more controller may be configured to determine if the current distance is increasing or decreasing. For example, the one or more controller may monitor the current distance to identify changes with respect to time. The one or more controller may be configured to generate the first control signal in dependence on a determination that the current distance is less than or equal to the first set distance and the current distance is decreasing. Thus, the first control signal may be generated to request movement of the moveable barrier to the open position only when the current distance is less than the first set distance and is decreasing.

The one or more controller may be configured to generate the control signal in dependence on a comparison of the determined current distance to a second set distance. The second set distance may be predefined. The second set distance may be calibratable, for example the second set distance may be user-calibratable to suit a particular use case.

The first set distance could be the same as the second set distance. Alternatively, the first set distance and the second set distance may be different from each other.

The one or more controller may generate the control signal in dependence on a determination that the current distance is greater than the second set distance. The control signal may comprise or consist of a second control signal. The second control signal may comprise a request to displace the moveable barrier to a second position. The second position may be a closed position. The second control signal may comprise or consist of a close barrier request.

The one or more controller may be configured to determine if the current distance is increasing or decreasing. For example, the one or more controller may monitor the current distance to identify changes with respect to time. The one or more controller may be configured to generate the second control signal in dependence on a determination that the current distance is greater than the second set distance and the current distance is increasing. Thus, the second control signal may be generated to request movement of the moveable barrier to the closed position only when the current distance is greater than the second set distance and is increasing.

The one or more controller may be configured to perform an authentication process with the moveable barrier. The authentication process may comprise identification of the control system. The authentication process may comprise an electronic handshake.

The one or more controller may be configured to generate the control signal in dependence on a comparison of the determined current distance to a third set distance. The one or more controller may be configured to suppress generation of the control signal to control the moveable barrier in dependence on a determination that the current distance is less than or equal to the third set distance. The third set distance may be predefined. The third set distance may comprise a clearance threshold. The third set distance may be defined to ensure that there is adequate clearance available to operate the moveable barrier without impinging on the host vehicle. The third set distance may be predefined in dependence on a path followed by the moveable barrier. For example, the third set distance may be larger for a pivoting barrier than a sliding barrier. The third set distance may be less than the first set distance.

The one or more controller may be configured to generate a stop signal for inhibiting or halting operation of the moveable barrier. The stop signal may be generated if the current distance is less than the third set distance.

The one or more controller may be configured to generate a distance signal for transmission by the transmitter to notify a barrier control unit of the current distance to the vehicle. The barrier control unit may be configured to control operation of the moveable barrier in dependence on the determined current distance.

The one or more controller may be configured to generate the first control signal and/or the second control signal in dependence on a determined vehicle heading. For example, the first control signal may be generated if the vehicle heading is oriented towards the moveable barrier; and the second control signal may be generated if the vehicle heading is oriented away from the moveable barrier. This may be used in conjunction with or instead of the current distance between the moveable barrier and the vehicle.

The one or more controller is configured to generate the second control signal in dependence on a determined geospatial location of the vehicle. The current distance between the moveable barrier and the vehicle is determined in dependence on the determined geospatial location of the vehicle. The current distance may be determined with reference to the geospatial location of the moveable barrier. The geospatial location of the moveable barrier may be predefined or may identified with reference to a suitable positioning system. Alternatively, or in addition, the first control signal may be generated if the geospatial location of the vehicle is within a first activation zone; and the second control signal may be generated if the geospatial location of the vehicle is within a second activation zone. The first activation zone and/or the second activation zone may be predefined.

The control signal to control movement of the barrier may be generated only if a portable device associated with the vehicle is within a predetermined distance of one or both of the barrier and the vehicle.

The control signal may be generated in response to a user request, but only if the vehicle is within a predetermined distance of the barrier.

This invention further relates to a vehicle comprising a system as described herein, according to claim 8.

This invention further relates to a method according to claim 9 of controlling operation of a moveable barrier, the method comprising:
determining a geospatial location of a vehicle with respect to the moveable barrier by: i) for each of a plurality of spaced apart antennas at the vehicle and/or at the barrier, measuring a time of flight of a signal transmitted from the moveable barrier to a control system of the vehicle and/or from the control system to the moveable barrier, and ii) trilateration or true-range multilateration of the signals; transmitting a polling signal to the moveable barrier; receiving an identification signal from the moveable barrier when the moveable barrier receives the polling signal; generating a control signal in dependence on the determined geospatial location, the control signal being configured to control movement of the moveable barrier; transmitting, using an ultrawideband transmitter, the control signal over a bandwidth greater than or equal to 500 MHz; and displacing the moveable barrier to an open position or a closed position in dependence on the determined current distance.

The method may comprise comparing the determined current distance to a first set distance.

The moveable barrier may be displaced to the open position in dependence on a determination that the determined current distance is less than or equal to the first set distance.

The method may comprise comparing the determined current distance to a second set distance. The moveable barrier being displaced to the closed position in dependence on a determination that the determined current distance is greater than the second set distance.

This invention further relates to a non-transitory computer-readable medium having a set of instructions stored therein which, when executed, cause a processor to perform the method described herein.

Any control unit or controller described herein may suitably comprise a computational device having one or more electronic processors. The system may comprise a single control unit or electronic controller or alternatively different functions of the controller may be embodied in, or hosted in, different control units or controllers. As used herein the term "controller" or "control unit" will be understood to include both a single control unit or controller and a plurality of control units or controllers collectively operating to provide any stated control functionality. To configure a controller or control unit, a suitable set of instructions may be provided which, when executed, cause said control unit or computational device to implement the control techniques specified herein. The set of instructions may suitably be embedded in said one or more electronic processors. Alternatively, the set of instructions may be provided as software saved on one or more memory associated with said controller to be executed on said computational device. The control unit or controller may be implemented in software run on one or more processors. One or more other control unit or controller may be implemented in software run on one or more processors, optionally the same one or more processors as the first controller. Other suitable arrangements may also be used.

### BRIEF DESCRIPTION OF THE DRAWINGS

One or more examples will now be described, by way of example only, with reference to the accompanying figures, in which:
Figure 1 shows a schematic representation of a vehicle incorporating a control system for controlling a moveable barrier;
Figure 2 shows a schematic representation of a moveable barrier and a barrier control unit for communicating with the control system shown in Figure 1;
Figure 3 shows a schematic representation of a controller for the control system shown in Figure 1; and
Figure 4 shows a block diagram representing operation of the control system according to this disclosure.

### DETAILED DESCRIPTION

A control system 1 for controlling a moveable barrier 2 in accordance with an embodiment of the present invention will now be described with reference to the accompanying figures.

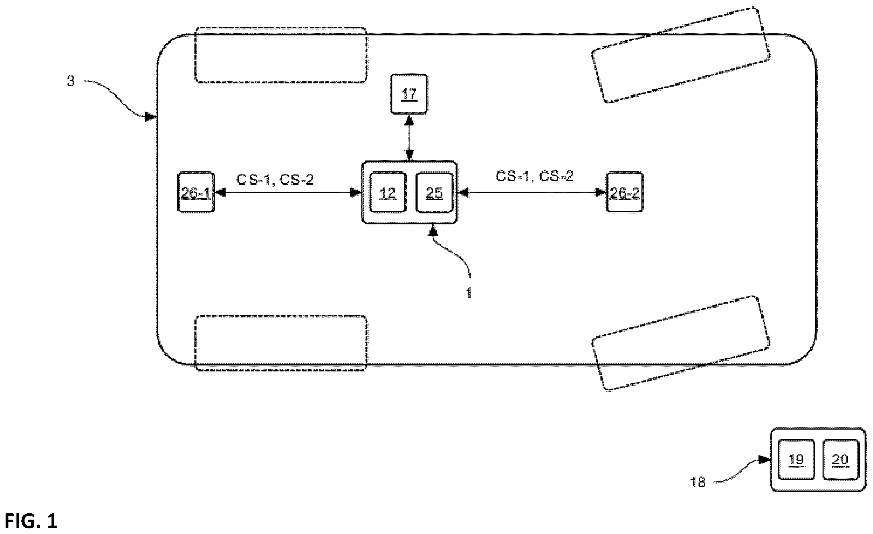

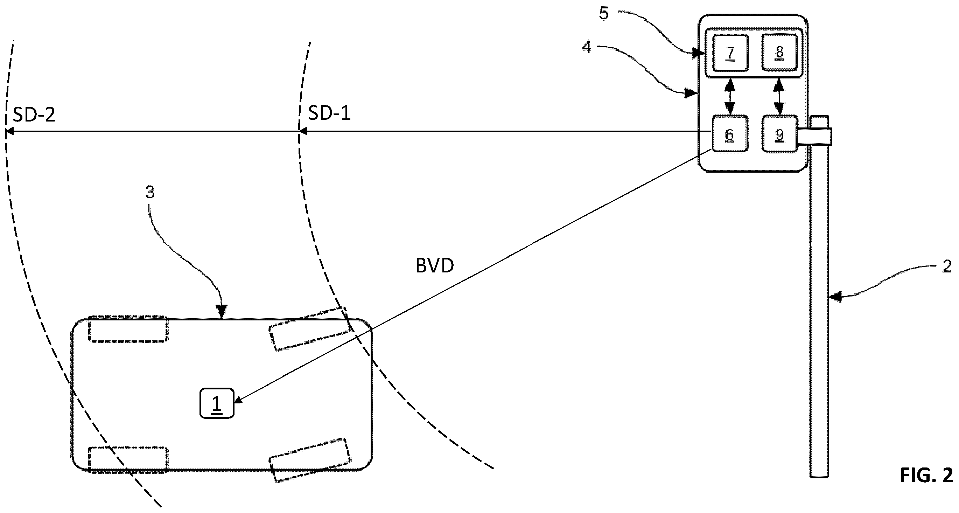

As shown in Figure 1, the control system 1 is implemented in a vehicle 3 selectively to control actuation of the moveable barrier 2 (shown in Figure 2). The moveable barrier 2 is disposed external to the vehicle 3 and may, for example, comprise a garage door or a gate. The moveable barrier 2 is electrically actuated to enable remote operation. As described herein, the control system 1 is configured automatically to control movement of the moveable barrier 2 between a closed position and an open position. The control system 1 may optionally also operate as an electronic key for controlling locking and/or unlocking of the moveable barrier 2.

The moveable barrier 2 comprises a barrier control unit 5. The barrier control unit 5 is configured to control operation of the moveable barrier 2. In particular, the barrier control unit 5 is configured to control opening and closing of the moveable barrier 2. The barrier control unit 5 is provided in a base station 4, as shown in Figure 2. In the illustrated arrangement, the base station 4 forms a structure for mounting the moveable barrier 2. The barrier control unit 5 comprises a barrier transceiver 6 (or is electrically connected to a barrier transceiver 6). The barrier control unit 5 comprises at least one electronic processor 7 and a memory system 8. The barrier control unit 5 is configured to control a barrier actuator 9 which is operable to displace the moveable barrier 2 between the closed position and the open position. The barrier actuator 9 may, for example, comprise a solenoid or an electromechanical actuator. The barrier transceiver 6 is a wireless transceiver configured to transmit and receive radio frequency (RF) signals. The barrier control unit 5 may be configured to transmit a wireless polling signal PS-n to communicate with the control system 1.

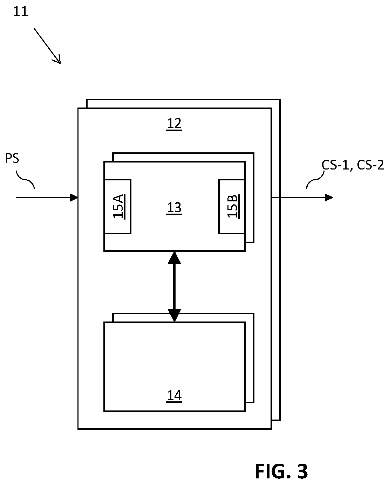

As shown in Figure 3, the control system 1 comprises a control unit 11 having one or more remote controller 12 for communicating with the barrier control unit 5 to control operation of the moveable barrier 2. In particular, the remote controller 12 is operative to control displacement of the moveable barrier 2 between the closed position and the open position. In the present embodiment, the remote controller 12 is operative selectively to lock and unlock the moveable barrier 2. The remote controller 12 comprises at least one electronic processor 13 and a system memory 14. A set of computational instructions is stored on the system memory 14. When executed the instructions cause the at least one electronic processor 13 to perform the method(s) described herein. The at least one electronic processor 13 has an electrical input 15A for receiving a polling signal PS from the barrier control unit 5; and at least one electrical output 15B for outputting one or more control signal CS-n to the barrier control unit 5. As described herein, the one or more control signal CS-n controls operation of the moveable barrier 2.

The control system 1 in the present embodiment is combined with a vehicle access system (denoted generally by the reference numeral 17) provided in the vehicle 3. It will be understood that the control system 1 may be discrete from other vehicle systems, such as the vehicle access system 17. The vehicle access system 17 is configured to provide passive access to the vehicle 3 (and optionally also a passive start function). The vehicle access system 17 is configured to communicate with one or more portable devices 18 which may be carried by a person, such as a user of the vehicle 3. The portable devices 18 are in the form of a dedicated electronic key, for example in the form of key fobs or the like. In a variant, the portable device 18 may be a general-purpose computational device, such as a cellular telephone. The cellular telephone may function as an electronic key, for example by confirming user identify. The portable device 18 may be configured to execute a software application for communicating with the vehicle 3, for example to identify the portable device 18 and to establish communication with the remote controller 12. The portable devices 18 each comprise a device controller 19 and a device transceiver 20 for transmitting and receiving a wireless (RF) signal. The device transceiver 20 in the present embodiment is an ultra-wideband transceiver. The device controller 19 comprises a processor (not shown) and a memory system (not shown). In a variant, the control system 1 may be integrated into one of the portable devices 18. For example, the device controller 19 may be configured to communicate with the barrier control unit 5 to control operation of the moveable barrier 2.

The control system 1 comprises a remote transceiver 25 for communicating with the barrier control unit 5. The remote transceiver 25 is a radio frequency (RF) transceiver for transmitting and receiving wireless signals. The remote transceiver 25 may be used by the vehicle access system 17 or may be a separate unit. The remote transceiver 25 is electrically connected to one or more antenna 26-n disposed on the vehicle 3. In the present embodiment, the remote transceiver 25 is connected to first and second antennas 26-1, 26-2 disposed in discrete locations spaced apart from each other. The remote transceiver 25 is a radio frequency (RF) transceiver operable to communicate with the barrier control unit 5, for example to transmit the control signals CS-n. The remote transceiver 25 may be a Low Frequency (LF) transmitter (operating at a radio frequency (RF) in the range 30-300 kHz); or an ultra High Frequency (UHF) transmitter (operating at a radio frequency (RF) in the range 300 megahertz (MHz) to 3 gigahertz (GHz). The remote transceiver 25 may have different operating frequencies for different territories. The remote transceiver 25 may comprise up to three channels having an operating frequency of 315 MHz (±17kHz); and/or up to three channels at 433.92 MHz (±17kHz). A LF coil (not shown) may be provided, or optionally a 3D coil.

The use of multiple spaced apart antennas permits the geospatial location of the vehicle (relative to the barrier) to be determined. In particular, by determining a distance (based on time of flight) between each of the antennae 26-1, 26-2 and the barrier, the relative location of the vehicle to the barrier (rather than just the distance) is determined by trilateration. A greater number of antennae, either or both at the vehicle and/or at the barrier, can be used to provide a more accurate position. In this way, the opening and/or closing of the barrier may be carried out based on a location, determined from the distance measurements. For example, the door may open only when the vehicle is determined to be within a specified geographical area.

In an embodiment not covered by the claims, the control system 1 is configured to receive the polling signal PS transmitted by the barrier control unit 5. The control system 1 responds to the polling signal PS by transmitting an identification code to identify the vehicle 3. The barrier control unit 5 receives the identification code and performs a check to determine if the control system 1 is authorised to operate the moveable barrier 2. The barrier control unit 5 is configured to unlock the moveable barrier 2 in dependence on successful identification of an authorised control system 1. The remote controller 12 may be authorised by identifying a pre-existing association with the barrier control unit 5 (or a pre-established digital connection). For example, the remote controller 12 may be electronically paired with the barrier control unit 5. An authentication process may be performed to authorise the remote controller 12, for example comprising sharing a unique identification code (numerical or alphanumeric) between the barrier control unit 5 and the remote controller 12.

In certain embodiments, the device transceiver 20 may comprise a low energy system suitable for local (short-range) communications, for example to a establish a wireless personal area network. The low energy system may be configured to make an initial connection with the barrier control unit 5. Alternatively, or in addition, the barrier control unit 5 may comprise a low energy system suitable for local (short-range) communications, for example to a establish a wireless personal area network.

The control system 1 in the present embodiment is configured to control operation of the moveable barrier 2 in dependence on a current barrier-to-vehicle distance BVD from the moveable barrier 2 to the vehicle 3. The current barrier-to-vehicle distance BVD is determined with reference to a time-of-flight of a signal transmitted from the vehicle 3 to the barrier control unit 5; and/or a time-of-flight of a signal transmitted from the barrier control unit 5 to the vehicle 3. Determining the barrier-to-vehicle distance BVD using the time-of-flight is advantageous since it may reduce accidental or malicious operation of the control system 1 beyond the local area. Also, time-of-flight distance determination is more robust against atmospheric effects. The current barrier-to-vehicle distance BVD is typically determined with reference to a (virtual) reference point on the vehicle 3. The one or more control signal CS-n generated by the electronic processor 13 is generated in dependence on the current barrier-to-vehicle distance BVD. The control system 1 transmits one or more control signal CS-n to the barrier control unit 5 in dependence on the determined current barrier-to-vehicle distance BVD. As described herein, the control system 1 compares the current barrier-to-vehicle distance BVD to one or more predetermined set distances PD-n and generates the one or more control signal S-n in dependence on the comparison. In addition, the current barrier-to-vehicle distance BVD may be determined in dependence on a signal strength. A correction may be applied to the current barrier-to-vehicle distance BVD to account for any offset between the location of the barrier control unit 5 and the moveable barrier 2. The position of the vehicle 3 relative to the barrier control unit 5 is determined by trilateration (or true-range multilateration) signals transmitted between the vehicle 3 and the barrier control unit 5.

In the present embodiment, the remote controller 12 is configured to generate first and second control signals CS-1, CS-2. The first control signal CS-1 comprises a barrier open request for requesting that the moveable barrier 2 is displaced to the open position; and the second control signal CS-2 comprises a barrier close request for requesting that the moveable barrier 2 is displaced to the closed position. The first and second control signals CS-1, CS-2 are generated with reference to the current barrier-to-vehicle distance BVD. The remote controller 12 is configured to compare the current barrier-to-vehicle distance BVD to a first set distance SD-1 and a second set distance SD-2. The first and second set distances SD-1, SD-2 are predefined distance values which may be the same as each other or may be different from each other. Default values may be defined for each of the first and second set distances SD-1, SD-2; or the first and second set distances SD-1, SD-2 may be calibrated for a particular application. For example, a user may calibrate the first and second set distances SD-1, SD-2 to align with their particular use requirements. The first set distance SD-1 may, for example, be defined as approximately 50m. In a variant, the first set distance SD-1 may be defined as approximately 2m, 5m, 7,5m or 10m.The first set distance SD-1 may be the same as the second set distance SD-2, or may be different from the second set distance SD-2. The first set distance SD-1 is illustrated in Figure 2 as being less than the second set distance SD-2. The second set distance SD-2 may, for example, be defined as approximately 75m or approximately 100m.

The first set distance SD-1 defines a first distance between the barrier control unit 5 and the vehicle 3 for initiating opening of the moveable barrier 2. The remote controller 12 compares the current barrier-to-vehicle distance BVD to the first set distance SD-1. If the comparison determines that the current barrier-to-vehicle distance BVD is less than or equal to the first set distance SD1, the remote controller 12 generates the first control signal CS-1. The first control signal CS-1 is transmitted by the remote transceiver 25 to the barrier control unit 5. In dependence on the first control signal CS-1, the barrier control unit 5 is configured to control the barrier actuator 9 to displace the moveable barrier 2 to the open position. The control system 1 may thereby operate automatically to open the moveable barrier 2. At least in certain embodiments, this may be performed without a specific input from a driver of the vehicle 3. The control system 1 may enable handsfree operation of the moveable barrier 2.

The second set distance SD-2 defines a second distance between the barrier control unit 5 and the vehicle 3 for initiating closure of the moveable barrier 2. The remote controller 12 compares the current barrier-to-vehicle distance BVD to the second set distance SD-2. If the comparison determines that the current barrier-to-vehicle distance BVD is greater than the second set distance SD2, the remote controller 12 generates the second control signal CS-2. The second control signal CS-2 is transmitted by the remote transceiver 25 to the barrier control unit 5. In dependence on the second control signal CS-2, the barrier control unit 5 is configured to control the barrier actuator 9 to displace the moveable barrier 2 to the closed position. The control system 1 may thereby operate automatically to close the moveable barrier 2. At least in certain embodiments, this may be performed without a specific input from a driver of the vehicle 3. The control system 1 may enable handsfree operation of the moveable barrier 2. At least in certain embodiments, the vehicle 3 may be authorised by the barrier control unit 5 only if the vehicle 3 is active (for example, the ignition is on). This may provide additional security, for example to protect against the vehicle 3 being towed to within the operation range of the barrier control unit 5 to gain unauthorised entry.

The remote controller 12 may optionally be configured to monitor the current barrier-to-vehicle distance BVD to identify changes in the current barrier-to-vehicle distance BVD. A decrease in the current barrier-to-vehicle distance BVD typically indicates that the vehicle 3 is travelling towards (vehicle approaching) the moveable barrier 2. Conversely, an increase in the current barrier-to-vehicle distance BVD typically indicates that the vehicle 3 is travelling away from (vehicle departing) the moveable barrier 2. The remote controller 12 may be configured to transmit the first control signal CS-1 in dependence on a determination that the current barrier-to-vehicle distance BVD is less than or equal to the first set distance SD-1 and is decreasing. Alternatively, or in addition, the remote controller 12 may be configured to transmit the second control signal CS-2 in dependence on a determination that the current barrier-to-vehicle distance BVD is greater than the second set distance SD-2 and is increasing. In a further variant, the remote controller 12 may be configured to determine a vehicle heading in relation to the moveable barrier 2. The vehicle heading may, for example, be defined as the orientation of the longitudinal axis of the vehicle 3 relative to the moveable barrier 2. The remote controller 12 may be configured to transmit the first control signal CS-1 in dependence on a determination that the vehicle heading corresponds to the vehicle 3 being oriented towards the moveable barrier 2. Alternatively, or in addition, the remote controller 12 may be configured to transmit the second control signal CS-2 in dependence on a determination that the vehicle heading corresponds to the vehicle 3 being oriented away from the moveable barrier 2. The control system determines a geospatial location of the vehicle 3. The remote controller 12 is configured to control generation of the first control signal CS-1 and optionally further the second control signal CS-2 in dependence on the determined geospatial location of the vehicle 3. The geospatial location of the vehicle 3 is determined relative to the barrier control unit 5, using trilateration (or true-range multilateration) of the signals transmitted between the vehicle 3 and the barrier control unit 5. In addition, the geospatial location of the vehicle 3 may be determined by an on-board positioning system, such as a satellite navigation system. It will be understood that the remote controller 12 may control output of the first control signal CS-1 and/or the second control signal CS-2 in dependence on one or more of these parameters. For example, the remote controller 12 may reference one or more of the following operating parameters: the current barrier-to-vehicle distance BVD; a change (an increase or a decrease) in the current barrier-to-vehicle distance BVD; a vehicle heading; and a geospatial location. The vehicle heading may be determined using any suitable known techniques, for example by communication with a satellite positioning system or triangulation with cellular communication towers.

As described herein, the remote controller 12 is configured to control operation of the moveable barrier 2. The remote controller 12 in the present embodiment is also configured to control the locking and unlocking of the moveable barrier 2. The remote controller 12 may, for example, control a lock mechanism 30 selectively to lock and unlock the moveable barrier 2. Rather than provide a separate lock mechanism 30, the barrier actuator 9 may be controlled to lock the position of the moveable barrier 2. The remote controller 12 functions as an electronic key for controlling locking and/or unlocking the moveable barrier 2.

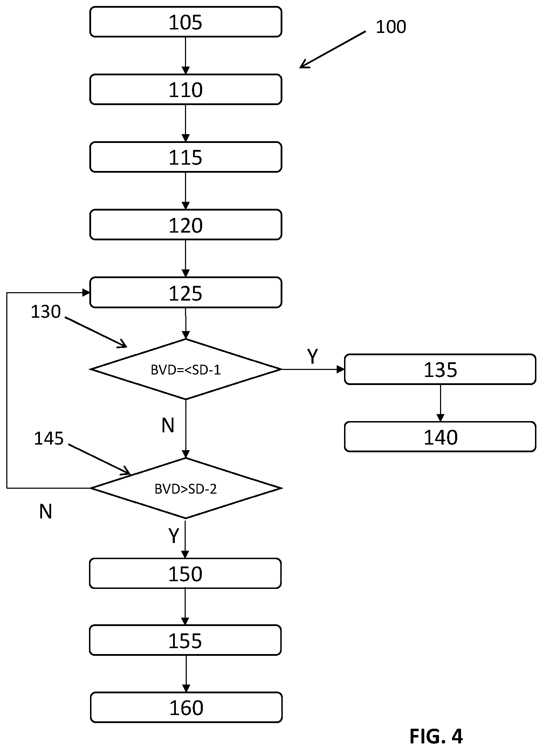

The operation of the control system 1 will now be described with reference to a first block diagram 100 shown in Figure 4. The control system 1 is activated (BLOCK 105). The barrier control unit 5 may transmit the polling signal PS (BLOCK 110). The control system 1 responds to the polling signal PS (BLOCK 115). According to the invention, the control system 1 transmits the polling signal PS (BLOCK 110); and the barrier control unit 5 responds to the polling signal PS (BLOCK 115). The barrier control unit 5 is authorised by the control system 1 (BLOCK 120). The barrier control unit 5 and the control system 1 communicate with each other and the current barrier-to-vehicle distance BVD is determined (BLOCK 125). The remote controller 12 compares the current barrier-to-vehicle distance BVD to the first set distance SD-1 (BLOCK 130). If the current barrier-to-vehicle distance BVD is less than or equal to the first set distance SD-1, the remote controller 12 generates the first control signal CS-1 (BLOCK 135). The first control signal CS-1 is transmitted to the barrier control unit 5 which controls the barrier actuator 9 to displace the moveable barrier 2 to the open position (BLOCK 140). If the current barrier-to-vehicle distance BVD is greater than the first set distance SD-1, the remote controller 12 compares the current barrier-to-vehicle distance BVD to the second set distance SD-2 (BLOCK 145). If the current barrier-to-vehicle distance BVD is greater than the second set distance SD-2, the remote controller 12 generates the second control signal CS-2 (BLOCK 150). The second control signal CS-2 is transmitted to the barrier control unit 5 which controls the barrier actuator 9 to displace the moveable barrier 2 to the closed position (BLOCK 155). If the current barrier-to-vehicle distance BVD is less than the second set distance SD-2, the remote controller 12 continues to monitor the current distance. The control system 1 may be deactivated or switched to a passive mode (BLOCK 160).

It will be appreciated that various modifications may be made to the embodiment(s) described herein without departing from the scope of the appended claims. The embodiment of the control system 1 described herein generates the second control signal CS-2 to request that the moveable barrier 2 is displaced to the closed position when the current barrier-to-vehicle distance BVD is greater than the second set distance SD-2. In a variant, the moveable barrier 2 may be displaced to the closed position when the control system 1 is no longer within a communication range of the barrier control unit 5. For example, the barrier control unit 5 may close the moveable barrier 2 when the control system 1 no longer responds to the polling signal PS-n.

It will be understood that the moveable barrier 2 may include one or more proximity sensor and the like to ensure that the moveable barrier 2 does not impinge on a vehicle, object or person situated in a movement path of the moveable barrier 2. The proximity sensor(s) may provide an override signal to halt or prevent opening or closing of the moveable barrier 2.

According to the invention, the polling signal is generated by the vehicle 3 with the barrier 2 responding with transmission of an identification signal when it receives the polling signal. In this case, the polling signal may only be transmitted when the vehicle is travelling below a predefined speed, to reduce current draw during periods in which it is unlikely that the vehicle will be proceeding to park or move through the barrier. Similarly, in some implementations, the polling signal may be transmitted only when the vehicle is within a predetermined geographical area (for example determined using a current GPS position of the vehicle and a geofenced area).

As explained above, the present technique may be integrated with a vehicle access system utilising a portable device 18. In some implementations automated access to the moveable barrier 2 may be contingent on the portable device 18 being one or more of in communications range of the vehicle 3, within a predetermined distance of the vehicle 3, or within a predetermined distance of the moveable barrier 2. For example, the barrier 3 may in some cases only be opened if both the vehicle 3 and the portable device 18 are found to satisfy a proximity requirement. It will be understood that time of flight distance measurements between the barrier 2 and the portable device 18 may be carried out in the same way as between the barrier 2 and the vehicle 3.

While some embodiments are intended to provide entirely automated access via the barrier, in other embodiments the distance measurement may be used to validate a manual request to open (or close) the barrier. Such a request may be made for example by way of a switch or other input control of the vehicle 3, or via the portable device 18. For example, either or both of the vehicle and the portable device 18 may provide a facility for a user to request opening (or closing) of the barrier. The request may in some embodiments only be actioned by opening (or closing) of the barrier 2 if the vehicle 3 is determined to be within a predetermined distance of the barrier at the time the request is made. This reduces the risk of unauthorised or accidental opening (or closing) of the barrier 2.

## Claims

1. A control system (1) for a vehicle (3) to enable communication with a moveable barrier (2), the control system (1) comprising a radio frequency transceiver and one or more controller (12) configured to:
communicate with the moveable barrier (2) to determine a geospatial location of the vehicle (3) relative to the moveable barrier (2) by:
i) for each of a plurality of spaced apart antennas (26-1, 26-2) at the vehicle (3) and/or at the moveable barrier (2), measuring a time of flight of a signal transmitted from the moveable barrier (2) to the control system (1) and/or from the control system (1) to the moveable barrier (2), and
ii) trilateration or true-range multilateration of the signals; and
generate (135) a control signal (CS-1, CS-2) in dependence on the determined geospatial location, the control signal being configured to control movement of the moveable barrier (2);
wherein the radio frequency transceiver is configured to:
transmit a polling signal to the moveable barrier (2);
receive an identification signal from the moveable barrier (2) when the moveable barrier (2) receives the polling signal; and
wherein the control system (1) comprises an ultrawideband transmitter configured to transmit the control signal over a bandwidth greater than or equal to 500 MHz.

2. A control system (1) as claimed in claim 1, wherein the one or more controller (12) comprises:
at least one electronic processor (13) having an electrical output for outputting the control signal (CS-1, CS-2) to control the moveable barrier (2); and
at least one memory device (14) electrically coupled to the at least one electronic processor (13) and having instructions stored therein,
and wherein the at least one electronic processor (13) is configured to access the at least one memory device (14) and execute the instructions therein so as to control the moveable barrier (2).

3. A control system (1) as claimed in claim 1 or claim 2 further comprising determining a current distance between the movable barrier (2) and the vehicle (3) in dependence on the determined geospatial location of the vehicle (3), and wherein the generation of the control signal (CS-1, CS-2) is additionally in dependence on the current distance and comprises comparing the current distance to a first set distance whereby the control signal (CS-1, CS-2) is generated if the current distance is less than or equal to the first set distance.

4. A control system as claimed in claim 3, wherein, in dependence on a determination that the current distance (CS-1, CS-2) is less than or equal to the first set distance, the one or more controller generates the control signal (CS-1, CS-2) comprising a first control signal to request movement of the moveable barrier (2) to an open position.

5. A control system (1) as claimed in any one of claims 3 or 4, wherein the one or more controller (12) is configured to determine if the current distance is increasing or decreasing.

6. A control system (1) as claimed in claim 5, wherein the one or more controller (12) is configured to generate the first control signal to request movement of the moveable barrier (2) to the open position in dependence on a determination that the current distance is less than or equal to the first set distance and the current distance is decreasing.

7. A control system (1) as claimed in any one of the preceding claims, wherein the one or more controller (12) is configured to perform an authentication process with the moveable barrier (2).

8. A vehicle (3) comprising a system (1) as claimed in any of the preceding claims.

9. A method of controlling operation of a moveable barrier (2), the method comprising:
determining a geospatial location of a vehicle (3) with respect to the moveable barrier (2) by:
i) for each of a plurality of spaced apart antennas (26-1, 26-2) at the vehicle and/or at the barrier (2), measuring a time of flight of a signal transmitted from the moveable barrier (2) to a control system of the vehicle and/or from the control system to the moveable barrier (2), and
ii) trilateration or true-range multilateration of the signals;
transmitting a polling signal to the moveable barrier (2);
receiving an identification signal from the moveable barrier (2) when the moveable barrier (2) receives the polling signal;
generating (135) a control signal (CS-1, CS-2) in dependence on the determined geospatial location, the control signal being configured to control movement of the moveable barrier (2);
transmitting, using an ultrawideband transmitter, the control signal over a bandwidth greater than or equal to 500 MHz; and
displacing the moveable barrier (2) to an open position or a closed position in dependence on the determined geospatial location.

10. A method as claimed in claim 9, wherein the method comprises determining a current distance between the movable barrier (2) and the vehicle (3) in dependence on the determined geospatial location of the vehicle (3) and comparing the determined current distance to a first set distance; the moveable barrier (2) being displaced to the open position in dependence on a determination that the determined current distance is less than or equal to the first set distance.

11. A method as claimed in claim 10, wherein the method comprises comparing the determined current distance to a second set distance; the moveable barrier (2) being displaced to the closed position in dependence on a determination that the determined current distance is greater than the second set distance.

12. A non-transitory computer-readable medium having a set of instructions stored therein which, when executed, cause a processor to perform the method claimed in any of claims 9 to 11.

## Patentansprüche

1. Steuersystem (1) für ein Fahrzeug (3), um eine Kommunikation mit einer bewegbaren Sperre (2) zu aktivieren, das Steuersystem (1) umfassend einen Hochfrequenz-Transceiver und eine oder mehrere Steuerungen (12), die konfiguriert sind zum:
Kommunizieren mit der bewegbaren Sperre (2), um eine geospatiale Lage des Fahrzeugs (3) relativ zu der bewegbaren Sperre (2) zu bestimmen, durch:
i) für jede einer Vielzahl von beabstandeten Antennen (26-1, 26-2) an dem Fahrzeug (3) und/oder an der bewegbaren Sperre (2), Messen einer Laufzeit eines Signals, das von der bewegbaren Sperre (2) zu dem Steuersystem (1) und/oder von dem Steuersystem (1) zu der bewegbaren Sperre (2) gesendet wird und
ii) Trilateration oder True-Range-Multilateration der Signale; und
Erzeugen (135) eines Steuersignals (CS-1, CS-2) in Abhängigkeit von der bestimmten geospatialen Lage, wobei das Steuersignal konfiguriert ist, um eine Bewegung der bewegbaren Sperre (2) zu steuern;
wobei der Hochfrequenz-Transceiver konfiguriert ist zum:
Senden eines Abfragesignals an die bewegbare Sperre (2);
Empfangen eines Identifikationssignals von der bewegbaren Sperre (2), wenn die bewegbare Sperre (2) das Abfragesignal empfängt; und
wobei das Steuersystem (1) einen Ultrabreitband-Sender umfasst, der konfiguriert ist, um das Steuersignal über eine Bandbreite größer als oder gleich 500 MHz zu senden.

2. Steuersystem (1) nach Anspruch 1, wobei die eine oder die mehreren Steuerungen (12) umfassen:
mindestens einen elektronischen Prozessor (13), der einen elektrischen Ausgang zum Ausgeben des Steuersignals (CS-1, CS-2) aufweist, um die bewegbare Sperre (2) zu steuern; und
mindestens eine Speichervorrichtung (14), die mit dem mindestens einen elektronischen Prozessor (13) elektrisch gekoppelt ist und darin gespeicherte Anweisungen aufweist,
und wobei der mindestens eine elektronische Prozessor (13) konfiguriert ist, um auf die mindestens eine Speichervorrichtung (14) zuzugreifen und die Anweisungen darauf auszuführen, um die bewegbare Sperre (2) zu steuern.

3. Steuersystem (1) nach Anspruch 1 oder 2, ferner umfassend das Bestimmen einer aktuellen Entfernung zwischen der bewegbaren Sperre (2) und dem Fahrzeug (3) in Abhängigkeit von der bestimmten geospatialen Lage des Fahrzeugs (3), und wobei die Erzeugung des Steuersignals (CS-1, CS-2) zusätzlich in Abhängigkeit von der aktuellen Entfernung ist und ein Vergleichen der aktuellen Entfernung mit einer ersten eingestellten Entfernung umfasst, wodurch das Steuersignal (CS-1, CS-2) erzeugt wird, falls die aktuelle Entfernung geringer als oder gleich der ersten eingestellten Entfernung ist.

4. Steuersystem nach Anspruch 3, wobei, in Abhängigkeit von einer Bestimmung, dass die aktuelle Entfernung (CS-1, CS-2) geringer als oder gleich der ersten eingestellten Entfernung ist, die eine oder die mehreren Steuerungen das Steuersignal (CS-1, CS-2) erzeugen, umfassend ein erstes Steuersignal, um eine Bewegung der bewegbaren Sperre (2) in eine offene Position anzufordern.

5. Steuersystem (1) nach einem der Ansprüche 3 oder 4, wobei die eine oder die mehreren Steuerungen (12) konfiguriert sind, um zu bestimmen, ob die aktuelle Entfernung zunimmt oder abnimmt.

6. Steuersystem (1) nach Anspruch 5, wobei die eine oder die mehreren Steuerungen (12) konfiguriert sind, das erste Steuersignal zu erzeugen, um eine Bewegung der bewegbaren Sperre (2) in die offene Position anzufordern, in Abhängigkeit von einer Bestimmung, dass die aktuelle Entfernung geringer als oder gleich der ersten eingestellten Entfernung ist und die aktuelle Entfernung abnimmt.

7. Steuersystem (1) nach einem der vorstehenden Ansprüche, wobei die eine oder die mehreren Steuerungen (12) konfiguriert sind, um einen Authentifizierungsprozess mit der bewegbaren Sperre (2) durchzuführen.

8. Fahrzeug (3), umfassend ein System (1) nach einem der vorstehenden Ansprüche.

9. Verfahren zum Steuern des Betriebs einer bewegbaren Sperre (2), das Verfahren umfassend:
Bestimmen einer geospatialen Lage eines Fahrzeugs (3) in Bezug auf die bewegbare Sperre (2) durch:
i) für jede einer Vielzahl von beabstandeten Antennen (26-1, 26-2) an dem Fahrzeug und/oder an der Sperre (2), Messen einer Laufzeit eines Signals, das von der bewegbaren Sperre (2) zu einem Steuersystem des Fahrzeugs und/oder von dem Steuersystem zu der bewegbaren Sperre (2) gesendet wird und
ii) Trilateration oder True-Range-Multilateration der Signale;
Senden eines Abfragesignals an die bewegbare Sperre (2);
Empfangen eines Identifikationssignals von der bewegbaren Sperre (2), wenn die bewegbare Sperre (2) das Abfragesignal empfängt;
Erzeugen (135) eines Steuersignals (CS-1, CS-2) in Abhängigkeit von der bestimmten geospatialen Lage, wobei das Steuersignal konfiguriert ist, um eine Bewegung der bewegbaren Sperre (2) zu steuern;
Senden, unter Verwendung eines Ultrabreitband-Senders, des Steuersignals über eine Bandbreite größer als oder gleich 500 MHz; und
Verschieben der bewegbaren Sperre (2) in eine offene Position oder eine geschlossene Position in Abhängigkeit von der bestimmten geospatialen Lage.

10. Verfahren nach Anspruch 9, wobei das Verfahren das Bestimmen einer aktuellen Entfernung zwischen der bewegbaren Sperre (2) und dem Fahrzeug (3) in Abhängigkeit von der bestimmten geospatialen Lage des Fahrzeugs (3) und das Vergleichen der bestimmten aktuellen Entfernung mit einer ersten eingestellten Entfernung umfasst; wobei die bewegbare Sperre (2) in die offene Position in Abhängigkeit von einer Bestimmung verschoben wird, dass die bestimmte aktuelle Entfernung geringer als oder gleich der ersten eingestellten Entfernung ist.

11. Verfahren nach Anspruch 10, wobei das Verfahren das Vergleichen der bestimmten aktuellen Entfernung mit einer zweiten eingestellten Entfernung umfasst; wobei die bewegbare Sperre (2) in die geschlossene Position in Abhängigkeit von einer Bestimmung verschoben wird, dass die bestimmte aktuelle Entfernung größer als die zweite eingestellte Entfernung ist.

12. Nichtflüchtiges computerlesbares Medium, das einen Satz von Anweisungen aufweist, die darin gespeichert sind, die, wenn sie ausgeführt werden, einen Prozessor veranlassen, das Verfahren nach einem der Ansprüche 9 bis 11 durchzuführen.

## Revendications

1. Système de commande (1) pour un véhicule (3) permettant une communication avec une barrière mobile (2), le système de commande (1) comprenant un émetteur-récepteur de radiofréquence et un ou plusieurs dispositifs de commande (12) configurés pour :
communiquer avec la barrière mobile (2) pour déterminer un emplacement géospatial du véhicule (3) par rapport à la barrière mobile (2) par :
i) pour chacune d'une pluralité d'antennes (26-1, 26-2) espacées les unes des autres au niveau du véhicule (3) et/ou au niveau de la barrière mobile (2), la mesure d'un temps de vol d'un signal transmis de la barrière mobile (2) au système de commande (1) et/ou du système de commande (1) à la barrière mobile (2), et
ii) la trilatération ou la multilatération à plage réelle des signaux ; et
générer (135) un signal de commande (CS-1, CS-2) en fonction de l'emplacement géospatial déterminé, le signal de commande étant configuré pour commander un mouvement de la barrière mobile (2) ;
dans lequel l'émetteur-récepteur de radiofréquence est configuré pour :
transmettre un signal d'invitation à émettre à la barrière mobile (2) ;
recevoir un signal d'identification de la barrière mobile (2) lorsque la barrière mobile (2) reçoit le signal d'invitation à émettre ; et
dans lequel le système de commande (1) comprend un émetteur à bande ultra-large configuré pour émettre le signal de commande sur une largeur de bande supérieure ou égale à 500 MHz.

2. Système de commande (1) selon la revendication 1, dans lequel le ou les dispositifs de commande (12) comprennent :
au moins un processeur électronique (13) ayant une sortie électrique pour délivrer en sortie le signal de commande (CS-1, CS-2) pour commander la barrière mobile (2) ; et
au moins un dispositif de mémoire (14) couplé électriquement à l'au moins un processeur électronique (13) et dans lequel sont stockées des instructions,
et dans lequel l'au moins un processeur électronique (13) est configuré pour accéder à l'au moins un dispositif de mémoire (14) et exécuter les instructions dans celui-ci de manière à commander la barrière mobile (2).

3. Système de commande (1) selon la revendication 1 ou la revendication 2, comprenant en outre la détermination d'une distance actuelle entre la barrière mobile (2) et le véhicule (3) en dépendance de l'emplacement géospatial déterminé du véhicule (3), et dans lequel la génération du signal de commande (CS-1, CS-2) dépend en outre de la distance actuelle et comprend la comparaison de la distance actuelle à une première distance définie moyennant quoi le signal de commande (CS-1, CS-2) est généré si la distance actuelle est inférieure ou égale à la première distance définie.

4. Système de commande selon la revendication 3, dans lequel, en fonction d'un fait de déterminer que la distance actuelle (CS-1, CS-2) est inférieure ou égale à la première distance définie, le ou les dispositifs de commande génèrent le signal de commande (CS-1, CS-2) comprenant un premier signal de commande pour demander un mouvement de la barrière mobile (2) vers une position ouverte.

5. Système de commande (1) selon l'une quelconque des revendications 3 ou 4, dans lequel le ou les dispositifs de commande (12) sont configurés pour déterminer si la distance actuelle augmente ou diminue.

6. Système de commande (1) selon la revendication 5, dans lequel le ou les dispositifs de commande (12) sont configurés pour générer le premier signal de commande afin de demander un mouvement de la barrière mobile (2) vers la position ouverte en fonction d'un fait de déterminer que la distance actuelle est inférieure ou égale à la première distance définie et que la distance actuelle diminue.

7. Système de commande (1) selon l'une quelconque des revendications précédentes, dans lequel le ou les dispositifs de commande (12) sont configurés pour effectuer un processus d'authentification avec la barrière mobile (2).

8. Véhicule (3) comprenant un système (1) selon l'une quelconque des revendications précédentes.

9. Procédé pour la commande d'un fonctionnement d'une barrière mobile (2), le procédé comprenant :
la détermination d'un emplacement géospatial d'un véhicule (3) par rapport à la barrière mobile (2) par :
i) pour chacune d'une pluralité d'antennes (26-1, 26-2) espacées les unes des autres au niveau du véhicule et/ou au niveau de la barrière (2), la mesure d'un temps de vol d'un signal transmis de la barrière mobile (2) au système de commande et/ou du système de commande à la barrière mobile (2), et
ii) la trilatération ou la multilatération à plage réelle des signaux ;
la transmission d'un signal d'invitation à émettre à la barrière mobile (2) ;
la réception d'un signal d'identification de la barrière mobile (2) lorsque la barrière mobile (2) reçoit le signal d'invitation à émettre ;
la génération (135) d'un signal de commande (CS-1, CS-2) en fonction de l'emplacement géospatial déterminé, le signal de commande étant configuré pour commander un mouvement de la barrière mobile (2) ;
l'émission, à l'aide d'un émetteur à bande ultra-large, du signal de commande sur une largeur de bande supérieure ou égale à 500 MHz ; et
le déplacement de la barrière mobile (2) vers une position ouverte ou une position fermée en fonction de l'emplacement géospatial déterminé.

10. Procédé selon la revendication 9, dans lequel le procédé comprend la détermination d'une distance actuelle entre la barrière mobile (2) et le véhicule (3) en fonction de l'emplacement géospatial déterminé du véhicule (3) et la comparaison de la distance actuelle déterminée à une première distance définie ; la barrière mobile (2) étant déplacée vers la position ouverte en fonction d'un fait de déterminer que la distance actuelle déterminée est inférieure ou égale à la première distance définie.

11. Procédé selon la revendication 10, dans lequel le procédé comprend la comparaison de la distance actuelle déterminée à une seconde distance définie ; la barrière mobile (2) étant déplacée vers la position fermée en fonction d'un fait de déterminer que la distance actuelle déterminée est supérieure à la seconde distance définie.

12. Support non transitoire lisible par ordinateur ayant un ensemble d'instructions stockées sur celui-ci qui, lorsqu'elles sont exécutées, amènent un processeur à réaliser le procédé selon l'une quelconque des revendications 9 à 11.
